(19)

Europäisches Patentamt
European Patent Office
Office européen des brevets

(11)  EP 4 477 296 A1

(12)  **EUROPEAN PATENT APPLICATION**
published in accordance with Art. 153(4) EPC

(43) Date of publication:
**18.12.2024  Bulletin 2024/51**

(21) Application number: **23752585.2**

(22) Date of filing: **05.01.2023**

(51) International Patent Classification (IPC):
**B01D 53/94** (2006.01)   **B01J 23/63** (2006.01)
**B01J 35/04** (2006.01)   **F01N 3/08** (2006.01)
**F01N 3/10** (2006.01)   **F01N 3/24** (2006.01)
**F01N 3/28** (2006.01)

(52) Cooperative Patent Classification (CPC):
**B01D 53/94; B01J 23/63; B01J 35/56; F01N 3/08;
F01N 3/10; F01N 3/24; F01N 3/28;** Y02T 10/12

(86) International application number:
**PCT/JP2023/000083**

(87) International publication number:
**WO 2023/153116 (17.08.2023 Gazette 2023/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **09.02.2022  JP 2022018863**

(71) Applicant: **CATALER CORPORATION
Kakegawa-shi, Shizuoka 437-1492 (JP)**

(72) Inventors:
• **OISHI, Shunsuke
Kakegawa-shi, Shizuoka 437-1492 (JP)**
• **ONOE, Ryota
Kakegawa-shi, Shizuoka 437-1492 (JP)**
• **HORI, Junichi
Kakegawa-shi, Shizuoka 437-1492 (JP)**
• **TAKASU, Ryosuke
Kakegawa-shi, Shizuoka 437-1492 (JP)**
• **ITO, Masaya
Kakegawa-shi, Shizuoka 437-1492 (JP)**
• **ONOHARA, Yu
Kakegawa-shi, Shizuoka 437-1492 (JP)**
• **TOGASHI, Hiromi
Kakegawa-shi, Shizuoka 437-1492 (JP)**

(74) Representative: **Ricker, Mathias
Wallinger Ricker Schlotter Tostmann
Patent- und Rechtsanwälte Partnerschaft mbB
Zweibrückenstraße 5-7
80331 München (DE)**

(54)  **EXHAUST GAS PURIFICATION CATALYTIC DEVICE**

(57)  Provided is an exhaust gas purification catalytic device having a first catalyst coating layer 200 and a second catalyst coating layer 300 on a substrate 100, wherein the first catalyst coating layer 200 includes first inorganic oxide particles 10 and first catalytic noble metal particles 40, the second catalyst coating layer 300 includes second inorganic oxide particles 60 and second catalytic noble metal particles 70, the first inorganic oxide particles 10 include a composite oxide support 30 containing an OSC material 11 and an alkaline earth metal oxide 20, the first catalytic noble metal particles 40 include one or two selected from Pt and Pd, the second inorganic oxide particles 60 include the OSC material 11, the second catalytic noble metal particles 70 include Rh, the first catalyst coating layer 200 is substantially free of Rh, and the second catalyst coating layer 300 is substantially free of Pt, Pd, and alkaline earth metal oxides.

Fig. 1

**Description**

FIELD

The present invention relates to an exhaust gas purification catalyst device.

BACKGROUND

Exhaust gas from internal combustion engines such as automobile engines comprise nitrogen oxides ($NO_X$), carbon monoxide (CO) and hydrocarbons (HC). Such exhaust gas is purified by exhaust gas purifying catalysts that oxidize CO and HC and reduce NOx before they are released into the air.

As a strategy to reduce air pollution, the three main components in exhaust gas, CO, HC and NOx, are regulated by various countries in terms of discharge weight per unit of automobile traveling distance.

Exhaust gas regulations are becoming stricter year by year. Currently applied regulations include LEV III regulations in the U.S. and Euro 6 regulations in Europe. Europe is expected to shift to Euro 7 regulations in the near future.

Euro 7 regulations require reduction in NOx emissions in a cold state such as during engine start-up, for example. The exhaust gas atmosphere during engine start-up is in the rich to stoichiometric range. It is therefore difficult to reduce NOx emissions in the cold state using conventional NOx purification technology designed for lean burn engines.

One technique for reducing NOx emissions in the prior art is described in PTL 1, as:

an exhaust gas purification catalyst provided with:

a lower catalyst layer comprising a first complex oxide comprising Ce and Zr, and Pd supported on the first complex oxide, and

an upper catalyst layer comprising a second complex oxide comprising Ce and Zr, and Rh supported on the second complex oxide, wherein an alkaline earth metal selected from among Ca, Sr and Mg is in solid solution in either or both the first complex oxide and second complex oxide.

In PTL 1 it is explained that solid solution of the alkaline earth metal in the complex oxide improves the NOx adsorption property of the complex oxide.

PTL 2 describes an oxidation-reduction catalyst having palladium and an alkaline earth metal supported on an oxide having oxygen storage-release capacity.

In PTL 2 it is explained that with this catalyst composition the alkaline earth metal contributes favorably to NOx adsorption and reaction.

[CITATION LIST]

[PATENT LITERATURE]

[PTL 1] Japanese Unexamined Patent Publication No. 2010-119994
[PTL 2] Japanese Unexamined Patent Publication No. 2001-198461

SUMMARY

[TECHNICAL PROBLEM]

PTLs 1 and 2 both relate to conventional exhaust gas purifying catalysts, and are insufficient in terms of NOx adsorption in a cold state such as during engine start-up, for example.

Being devised in light of these circumstances, it is an object of the present invention to provide an exhaust gas purification catalyst device with high NOx adsorption in the cold state, and reduced NOx emissions in the cold state.

[SOLUTION TO PROBLEM]

The present invention is as follows.

<Aspect 1>

An exhaust gas purification catalyst device comprising a substrate, a first catalyst coating layer on the substrate and a second catalyst coating layer on the first catalyst coating layer, wherein:

the first catalyst coating layer comprises first inorganic oxide particles and first noble metal catalyst particles,
the second catalyst coating layer comprises second inorganic oxide particles and second noble metal catalyst particles,
the first inorganic oxide particles comprise an OSC material and an alkaline earth metal oxide,
the first noble metal catalyst particles comprise either or both Pt and Pd,
the second inorganic oxide particles comprise an OSC material,
the second noble metal catalyst particles comprise Rh,
the amount of Rh in the first catalyst coating layer in terms of metal per 1 L volume of the substrate is 0.05 g/L or lower, and
the total amount of Pt and Pd in the second catalyst coating layer in terms of metal per 1 L volume of the substrate is 0.05 g/L or lower, and the amount of alkaline earth metal oxide per 1 L volume of the substrate is 0.5 g/L or lower.

<Aspect 2>

The exhaust gas purification catalyst device according to aspect 1, wherein the first inorganic oxide particles comprise:

a complex oxide carrier comprising an OSC material and a first alkaline earth metal oxide, and
a second alkaline earth metal oxide supported on the complex oxide carrier.

<Aspect 3>

The exhaust gas purification catalyst device according to aspect 2, wherein at least a portion of the first noble metal catalyst particles are supported on the complex oxide carrier together with the second alkaline earth metal oxide.

<Aspect 4>

The exhaust gas purification catalyst device according to aspect 2 or 3, wherein the first alkaline earth metal oxide is magnesium oxide.

<Aspect 5>

The exhaust gas purification catalyst device according to any one of aspects 2 to 4, wherein the second alkaline earth metal oxide is one or more selected from the group consisting of magnesium oxide, barium oxide and strontium oxide.

<Aspect 6>

The exhaust gas purification catalyst device according to any one of aspects 2 to 5, wherein the amount of the first alkaline earth metal oxide is 0.1 mass% or higher and 20 mass% or lower, based on 100 mass% as the total mass of the complex oxide carrier.

<Aspect 7>

The exhaust gas purification catalyst device according to any one of aspects 2 to 6, wherein the loading amount of the second alkaline earth metal oxide is 0.5 mass% or higher and 25 mass% or lower, based on 100 mass% as the total mass of the complex oxide carrier.

<Aspect 8>

The exhaust gas purification catalyst device according to any one of aspects 2 to 7, wherein the amount of the first noble metal catalyst particles is 0.5 g/L or greater and 10.0 g/L or lower per 1 L volume of the substrate.

<Aspect 9>

The exhaust gas purification catalyst device according to any one of aspects 2 to 8, wherein the first inorganic oxide particles further comprise alumina.

<Aspect 10>

The exhaust gas purification catalyst device according to any one of aspects 1 to 9, wherein the amount of the second noble metal catalyst particles is 0.05 g/L or greater and 2.0 g/L or lower per 1 L volume of the substrate.

<Aspect 11>

The exhaust gas purification catalyst device according to any one of aspects 1 to 10, wherein the second inorganic oxide particles further comprise alumina.

<Aspect 12>

The exhaust gas purification catalyst device according to any one of aspects 1 to 11, wherein the OSC material comprises ceria in a cerium-zirconium complex oxide.

<Aspect 13>

The exhaust gas purification catalyst device according to any one of aspects 1 to 12, wherein the first noble metal catalyst particles comprise both Pt and Pd.

<Aspect 14>

The exhaust gas purification catalyst device according to any one of aspects 1 to 13, wherein the coating length of the first catalyst coating layer is 35% or greater of the entire length of the substrate.

<Aspect 15>

The exhaust gas purification catalyst device according to any one of aspects 1 to 14, wherein the coating length of the second catalyst coating layer is 70% or greater of the entire length of the substrate.

<Aspect 16>

An exhaust gas purification method which comprises contacting exhaust gas with an exhaust gas purification catalyst device according to any one of aspects 1 to 15.

[ADVANTAGEOUS EFFECTS OF INVENTION]

The exhaust gas purification catalyst device of the invention has high NOx adsorption in the cold state, and reduced NOx emissions in the cold state.

BRIEF DESCRIPTION OF DRAWINGS

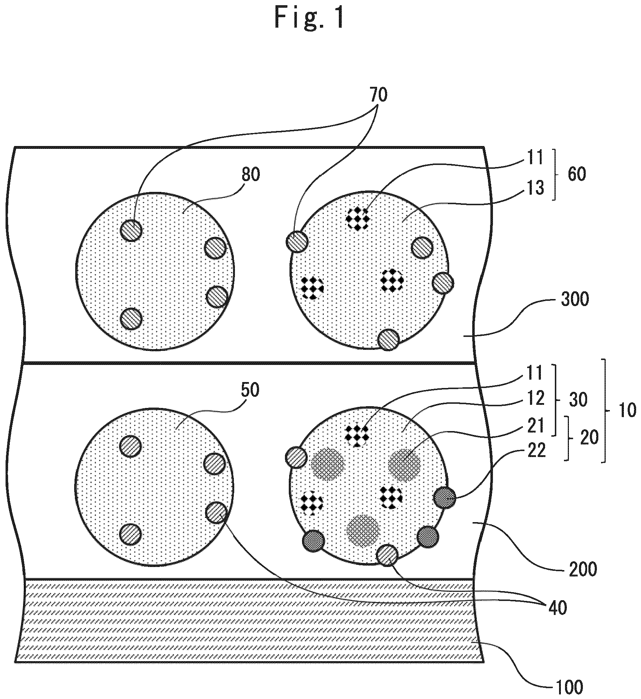

Fig. 1 is a conceptual drawing illustrating an example of the construction of an exhaust gas purification catalyst device of the invention.

DESCRIPTION OF EMBODIMENTS

<Exhaust gas purification catalyst device>

The exhaust gas purification catalyst device of the invention has a substrate, a first catalyst coating layer on the substrate and a second catalyst coating layer on the first catalyst coating layer, wherein:

the first catalyst coating layer comprises first inorganic oxide particles and first noble metal catalyst particles,

the second catalyst coating layer comprises second inorganic oxide particles and second noble metal catalyst particles,

the first inorganic oxide particles comprise an OSC material and an alkaline earth metal oxide,

the first noble metal catalyst particles comprise either or both Pt and Pd,

the second inorganic oxide particles comprise an OSC material,

the second noble metal catalyst particles comprise Rh,

the amount of Rh in the first catalyst coating layer in terms of metal per 1 L volume of the substrate is 0.05 g/L or lower, and

the total amount of Pt and Pd in the second catalyst coating layer in terms of metal per 1 L volume of the substrate is 0.05 g/L or lower, and the amount of alkaline earth metal oxide per 1 L volume of the substrate is 0.5 g/L or lower.

The exhaust gas purification catalyst device of the invention has the first catalyst coating layer as the lower layer and the second catalyst coating layer as the upper layer on the substrate.

The first catalyst coating layer comprises the OSC material, the alkaline earth metal oxide, and the first noble metal catalyst particles selected from among Pt and Pd.

The exhaust gas atmosphere during engine start-up (in the cold state) is in the rich to stoichiometric range. The OSC material, such as ceria, is in the reduced state at engine start-up, and is assumed to have oxygen defects. Since the first catalyst coating layer in the exhaust gas purification catalyst device of the invention comprises the OSC material with oxygen defects at engine start-up, the number of NOx adsorption sites in the cold state is increased.

The first catalyst coating layer also comprises an alkaline earth metal oxide. This increases the number of basic sites in the first catalyst coating layer, and increases the number of NOx adsorption sites.

The first catalyst coating layer also includes the first noble metal catalyst particles selected from among Pt and Pd. Since the first noble metal catalyst particles have oxidation catalytic ability, they convert NOx to $NO_3^-$ ions, for example, thus facilitating NOx adsorption at basic sites.

The first catalyst coating layer comprises essentially no Rh. This avoids loss of catalytic activity of the first noble metal catalyst particles (Pd, Pt) in the first catalyst coating layer, so that high NOx adsorption capacity is exhibited.

The first catalyst coating layer is disposed on the lower layer of the exhaust gas purification catalyst device of the invention. The first catalyst coating layer is therefore less likely to be warmed during engine start-up, allowing the aforementioned NOx adsorption capacity to be very effectively exhibited.

The NOx adsorbed onto the first catalyst coating is gradually released as warming proceeds after engine start-up.

The second catalyst coating layer comprises an OSC material and second noble metal catalyst particles, which are Rh.

The second noble metal catalyst particles in the second catalyst coating layer have a reduction catalyst function. The NOx released from the first catalyst coating is therefore reduced and purified by the second noble metal catalyst particles in the second catalyst coating layer. The second catalyst coating layer comprises an OSC material. Since the exhaust gas atmosphere is therefore alleviated by the OSC material even when the exhaust gas atmosphere fluctuates, it is possible for the second noble metal catalyst particles to maintain their reduction catalyst activity.

The second catalyst coating layer also comprises essentially no Pt or Pd, or alkaline earth metal oxide. This avoids loss of NOx reduction purification activity of the second noble metal catalyst particles (Rh) in the second catalyst coating layer, so that high NOx purification performance is exhibited.

The second catalyst coating layer is disposed on the upper layer of the exhaust gas purification catalyst device of the invention. The second catalyst coating layer is therefore rapidly warmed after engine start-up, allowing the aforementioned NOx reduction purification to be very effectively exhibited.

The exhaust gas purification catalyst device of the invention exhibits excellent NOx removal performance by the action mechanism described above. However, the present invention is not to be constrained by this interpretation.

The constituent elements of the exhaust gas purification catalyst device of the invention will now be explained in order.

<Substrate>

The substrate in the exhaust gas purification catalyst device of the invention may be a substrate similar to those used in exhaust gas purification catalyst devices. The substrate may be a honeycomb substrate having a plurality of exhaust gas flow paths partitioned by partition walls, for example. The partition walls of the substrate may also have pores allowing fluid communication between adjacent exhaust gas flow paths.

The constituent material of the substrate may be a fire resistant inorganic oxide such as cordierite, for example. The substrate may be either a straight flow type or a wall flow type.

The substrate of the exhaust gas purification catalyst device of the invention may typically be a cordierite straight flow type or wall flow type monolith honeycomb substrate, for example.

<First catalyst coating layer>

The first catalyst coating layer of the exhaust gas purification catalyst device of the invention is disposed on the substrate. The second catalyst coating layer is disposed on at least a portion, and preferably the entirety, of the first catalyst coating layer. The first catalyst coating layer may therefore be the lower layer of a catalyst coating layer having a two-layer structure.

The first catalyst coating layer comprises first inorganic oxide particles and first noble metal catalyst particles.

<First inorganic oxide particles>

The first inorganic oxide particles in the first catalyst coating layer comprise the OSC material and the alkaline earth metal oxide. The abbreviation "OSC" stands for "Oxygen Storage Capacity" or "Oxygen Storage/release Capacity", being the ability to store and release oxygen. An "OSC material" is "a material having the capacity to store and release oxygen".

The OSC material in the first inorganic oxide particles may be ceria ($CeO_2$), for example. Using ceria as the OSC material includes having ceria present as a single type in the first inorganic oxide particles, or cerium forming a complex oxide with another metal.

When the OSC material is ceria as a complex oxide of cerium with another metal, the complex oxide may be a cerium-zirconium complex oxide, for example. When ceria is present as ceria in a cerium-zirconium complex oxide, the amount of oxygen defects in the ceria increases in the rich to stoichiometric range, thereby further increasing the number of NOx adsorption sites of first inorganic oxide particles in the cold state.

The ceria content in the cerium-zirconium complex oxide, represented as the mass amount of cerium atoms in the complex oxide in terms of ceria ($Ce_2O_3$), is 5 mass% or greater, 10 mass% or greater, 15 mass% or greater or 20 mass% or greater, and 50 mass% or lower, 45 mass% or lower, 40 mass% or lower, 35 mass% or lower, 30 mass% or lower or 25 mass% or lower, as the percentage of the total mass of the complex oxide.

The alkaline earth metal oxide in the first inorganic oxide particles may be one or more selected from among beryllium oxide, magnesium oxide, calcium oxide, strontium oxide, barium oxide and radium oxide, with one or more selected from among magnesium oxide, calcium oxide, strontium oxide and barium oxide being especially preferred.

The first inorganic oxide particles may also comprise other components in addition to the OSC material and alkaline earth metal oxide. Examples of other components to be in the first inorganic oxide particles include alumina, silica or titania; and one or more rare earth oxides selected from among oxides of rare earth elements other than ceria.

The amount of the OSC material (typically ceria) to be in the first inorganic oxide particles may be 5 mass% or greater, 7.5 mass% or greater or 15 mass% or greater, with 100 mass% as the total mass of the first inorganic oxide particles, in order to ensure a sufficient number of NOx adsorption sites in the cold state. The amount of the OSC material in the first inorganic oxide particles may also be 50 mass% or lower, 45 mass% or lower, 40 mass% or lower, 35 mass% or lower, 30 mass% or lower, 25 mass% or lower or 20 mass% or lower, with 100 mass% as the total mass of the first inorganic oxide particles, in order to obtain the benefit of including other components in the first inorganic oxide particles.

The amount of the OSC material (typically ceria) in the first catalyst coating layer may be 3.0 g/L or greater, 4.0 g/L or greater, 5.0 g/L or greater or 6.0 g/L or greater, and 20.0 g/L or lower, 15.0 g/L or lower, 12.0 g/L or lower, 11.0 g/L or lower or 10.0 g/L or lower, as the mass of the OSC material per 1 L volume of the substrate.

When ceria is used as the OSC material, the amount of ceria where ceria forms a complex oxide with another metal is the amount of cerium atoms in the complex oxide in terms of ceria ($CeO_2$).

The amount of alkaline earth metal oxide in the first inorganic oxide particles may be 1 mass% or greater, 3 mass% or greater, 5 mass% or greater, 8 mass% or greater, 10 mass% or greater, 12 mass% or greater, 15 mass% or greater or 20 mass% or greater, and 50 mass% or lower, 40 mass% or lower, 35 mass% or lower, 30 mass% or lower or 25 mass% or lower, with 100 mass% as the mass of the first inorganic oxide particles.

The amount of alkaline earth metal oxide in the first catalyst coating layer may be 3.0 g/L or greater, 3.5 g/L or greater, 4.0 g/L or greater, 4.5 g/L or greater, 5.0 g/L or greater or 5.5 g/L or greater, and 15.0 g/L or lower, 12.0 g/L or lower, 10.0 g/L or lower, 9.0 g/L or lower, 8.0 g/L or lower or 7.5 g/L or lower, as the mass of the alkaline earth metal oxide per 1 L volume of the substrate.

The first inorganic oxide particles in the exhaust gas purification catalyst device of the invention may comprise:

   a complex oxide carrier comprising an OSC material and a first alkaline earth metal oxide, and
   a second alkaline earth metal oxide supported on the complex oxide carrier.

The complex oxide carrier comprises the OSC material and the first alkaline earth metal oxide.

The OSC material used in the complex oxide carrier may be of the same type as mentioned above for the OSC material in the first inorganic oxide particles. The content of the OSC material in the complex oxide carrier may be 5 mass% or greater, 7.5 mass% or greater, 15 mass% or greater or 20 mass% or greater, and 50 mass% or lower, 45 mass% or lower, 40 mass% or lower, 35 mass% or lower, 30 mass% or lower or 25 mass% or lower, with 100 mass% as the total mass of the complex oxide carrier.

The first alkaline earth metal oxide in the complex oxide carrier may be one or more selected from among magnesium oxide, calcium oxide and strontium oxide, with magnesium oxide being especially preferred.

The first alkaline earth metal oxide may be present as a single type of alkaline earth metal oxide in the complex oxide carrier, or it may form a solid solution with the OSC material, or with a complex oxide comprising the OSC material (such as cerium-zirconium complex oxide).

The amount of the first alkaline earth metal oxide in the complex oxide carrier may be 0.1 mass% or greater, 0.5 mass% or greater, 1.0 mass% or greater, 2.0 mass% or greater, 3.0 mass% or greater or 4.0 mass% or greater, with 100 mass% as the total mass of the complex oxide carrier, from the viewpoint of sufficiently increasing the number of NOx adsorption sites of the complex oxide carrier. In order to obtain the benefit of including other components in the complex oxide, the amount of the first alkaline earth metal oxide may be 20 mass% or lower, 15 mass% or lower, 12 mass% or lower, 10 mass% or lower or 8 mass% or lower, with 100 mass% as the total mass of the complex oxide carrier.

The amount of the first alkaline earth metal oxide in the first catalyst coating layer may be 0.1 g/L or greater, 0.2 g/L or greater, 0.3 g/L or greater, 0.5 g/L or greater, 0.7 g/L or greater, 1.0 g/L or greater, 1.5 g/L or greater or 2.0 g/L or greater, and 10.0 g/L or lower, 8.0 g/L or lower, 6.0 g/L or lower, 5.0 g/L or lower, 4.0 g/L or lower, 3.0 g/L or lower or 2.0 g/L or lower, as the mass of the first alkaline earth metal oxide per 1 L volume of the substrate.

When the first alkaline earth metal oxide forms a solid solution with the OSC material or with a complex oxide comprising the OSC material, the amount of the first alkaline earth metal oxide is the amount of the first alkaline earth metal in the solid solution represented in terms of oxide.

The complex oxide carrier may further comprise components other than the OSC material and the first alkaline earth metal oxide.

As mentioned above, the OSC material in the complex oxide carrier may be present as ceria in a cerium-zirconium complex oxide, for example, and therefore the complex oxide carrier may include zirconia. The zirconia content in the complex oxide carrier may be 20 mass% or greater, 30 mass% or greater, 40 mass% or greater, 50 mass% or greater, 60 mass% or greater or 65 mass% or greater, with 100 mass% as the total mass of the complex oxide carrier. In order to obtain the benefit of including other components in the complex oxide carrier, the amount of the first alkaline earth metal oxide may be 90 mass% or lower, 85 mass% or lower, 80 mass% or lower, 75 mass% or lower or 70 mass% or lower, with 100 mass% as the total mass of the complex oxide carrier.

The amount of zirconia in the first catalyst coating layer may be 10.0 g/L or greater, 12.0 g/L or greater, 15.0 g/L or greater, 17.0 g/L or greater or 20.0 g/L or greater, and 70.0 g/L or lower, 60.0 g/L or lower, 50.0 g/L or lower, 40.0 g/L or lower or 30.0 g/L or lower, as the mass of zirconia per 1 L volume of the substrate.

When zirconium forms a complex oxide with another metal, the zirconia amount is the amount of zirconium atoms in the complex oxide represented in terms of zirconia ($ZrO_2$).

The complex oxide carrier may also comprise one or more from among alumina, silica and titania; or oxides of rare earth elements other than ceria. When the complex oxide carrier comprises two or more components, the two or more oxides may each be present as a single type of oxide, or as a complex oxide comprising two or more metal atoms.

The second alkaline earth metal oxide is supported on the complex oxide carrier.

The second alkaline earth metal oxide is one or more selected from the group consisting of magnesium oxide, barium oxide and strontium oxide. The second alkaline earth metal oxide is most preferably barium oxide or strontium oxide.

The second alkaline earth metal oxide may also be a particulate oxide. The particle diameter of the second alkaline earth metal oxide particles may be 5 nm or greater, 10 nm or greater, 15 nm or greater, 20 nm or greater or 25 nm or greater, and 50 nm or lower, 45 nm or lower, 40 nm or lower or 35 nm or lower, as the number-average primary particle size calculated from XRD.

The loading amount of the second alkaline earth metal oxide may be 0.5 mass% or greater, 1.0 mass% or greater, 2.0 mass% or greater, 3.0 mass% or greater, 4.0 mass% or greater, 5.0 mass% or greater or 6.0 mass% or greater, with 100 mass% as the mass of the complex oxide carrier, from the viewpoint of ensuring sufficient NOx adsorption.

However, increasing the loading amount of the second alkaline earth metal oxide does not increase the NOx adsorption without limit. From this viewpoint, the loading amount of the second alkaline earth metal oxide may be 25 mass% or lower, 20 mass% or lower, 15 mass% or lower, 12 mass% or lower, 10 mass% or lower or 8 mass% or lower, with 100 mass% as the mass of the complex oxide carrier.

The amount of the first inorganic oxide particles in the first catalyst coating layer may be 5.0 g/L or greater, 10.0 g/L or greater, 20.0 g/L or greater, 30.0 g/L or greater, 50.0 g/L or greater or 60.0 g/L or greater, and 200.0 g/L or lower, 150.0 g/L or lower, 120.0 g/L or lower, 100.0 g/L or 80.0 g/L or lower, as the mass of the first inorganic oxide particles per 1 L volume of the substrate.

<Other components>

The first catalyst coating layer may also comprise other components in addition to the first inorganic oxide particles. Such other components include inorganic oxide particles other than the first inorganic oxide particles, and binders, for example.

Inorganic oxide particles other than the first inorganic oxide particles may be, for example:

one type of inorganic oxide selected from among alumina, silica, titania and zirconia;

a complex oxide composed of two or more selected from among alumina, silica, titania and zirconia; or

a complex oxide composed of one or more selected from among alumina, silica, titania and zirconia and one or more selected from among rare earth elements other than ceria.

The first inorganic oxide particles preferably comprise alumina from the viewpoint of heat resistance of the exhaust gas purification catalyst device. The alumina content of the first inorganic oxide particles may be 10 mass% or greater, 20 mass% or greater, 30 mass% or greater, 40 mass% or greater or 50 mass% or greater, and 90 mass% or lower, 80 mass% or lower, 70 mass% or lower, 60 mass% or lower or 50 mass% or lower, with 100 mass% as the total mass of the first inorganic oxide particles.

The amount of alumina in the first catalyst coating layer may be 5.0 g/L or greater, 10.0 g/L or greater, 20.0 g/L or greater, 30.0 g/L or greater, 50.0 g/L or greater or 60.0 g/L or greater, and 200.0 g/L or lower, 150.0 g/L or lower, 120.0 g/L or lower, 100.0 g/L or 80.0 g/L or lower, as the mass of alumina per 1 L volume of the substrate.

<First noble metal catalyst particles>

The first catalyst coating layer comprises first noble metal catalyst particles together with the first inorganic oxide particles. The first noble metal catalyst particles comprise either or both Pt and Pd, and most preferably comprise both Pt and Pd.

The amount of the first noble metal catalyst particles in the first catalyst coating layer may be 0.5 g/L or greater, 0.7 g/L or greater, 1.0 g/L or greater, 2.0 g/L or greater, 3.0 g/L or greater or 4.0 g/L or greater, and 10.0 g/L or lower, 8.0 g/L or lower, 7.0 g/L or lower, 6.0 g/L or lower or 5.0 g/L or lower, as the mass of the first noble metal catalyst particles per 1 L volume of the substrate (the total mass, for multiple types of noble metals).

The amount of Rh in the first catalyst coating layer is 0.05 g/L or lower, in terms of metal per 1 L volume of the substrate. An amount of Rh in the first catalyst coating layer of 0.05 g/L or lower means that the first catalyst coating layer comprises essentially no Rh. If the first catalyst coating layer comprises essentially no Rh, it will be possible to inhibit reduction in activity due to alloying between the first noble metal catalyst particles and the Rh.

The amount of Rh in terms of metal per 1 L volume of the substrate in the first catalyst coating layer may be 0.03 g/L or lower, 0.01 g/L or lower, 0.005 g/L or lower, 0.003 g/L or lower or 0.001 g/L or lower, or the first catalyst coating layer may comprise absolutely no Rh.

The first noble metal catalyst particles in the first catalyst coating layer are supported on the first inorganic oxide particles.

The first noble metal catalyst particles in the first catalyst coating layer are supported on the first inorganic oxide particles.

When the first catalyst coating layer comprises inorganic oxide particles other than the first inorganic oxide particles, together with the first inorganic oxide particles, the first noble metal catalyst particles may be supported on either one of the first inorganic oxide particles or the inorganic oxide particles other than the first inorganic oxide particles, or it may be supported on both.

When the first noble metal catalyst particles are supported on the first inorganic oxide particles, at least a portion of the first noble metal catalyst particles will be supported on the complex oxide carrier together with the second alkaline earth metal oxide.

<Coating length of first catalyst coating layer>

The coating length of the first catalyst coating layer may be 35% or greater, 50% or greater, 60% or greater, 70% or greater, 80% or greater, 90% or greater or 95% or greater of the entire length of the substrate, or the first catalyst coating layer may be disposed over the entire length of the substrate, from the viewpoint of ensuring sufficient NOx adsorption.

When the coating length of the first catalyst coating layer is shorter than the entire length of the substrate, preferably the first catalyst coating layer is situated on the substrate as far as possible toward the upstream end of the exhaust gas flow, and preferably the upstream end of the first catalyst coating layer is situated to match the upstream end of the substrate, from the viewpoint of contacting the first catalyst coating layer with exhaust gas as rapidly as possible to contribute to NOx adsorption.

<Second catalyst coating layer>

The second catalyst coating layer of the exhaust gas purification catalyst device of the invention is disposed on the first catalyst coating layer. The first catalyst coating layer is also disposed under at least a portion, and preferably the entirety, of the second catalyst coating layer. The second catalyst coating layer may therefore be the upper layer of a catalyst coating layer having a two-layer structure. When the first catalyst coating layer is not disposed under the second catalyst coating layer, a portion of the second catalyst coating layer may be disposed directly on the substrate.

The second catalyst coating layer comprises second inorganic oxide particles and second noble metal catalyst particles.

<Second inorganic oxide particles>

The second inorganic oxide particles comprise an OSC material.

The OSC material in the second inorganic oxide particles may be ceria ($CeO_2$), for example. Using ceria as the OSC material includes ceria present as a single type in the second inorganic oxide particles, or cerium forming a complex oxide with another metal.

When the OSC material is ceria as a complex oxide of cerium with another metal, the complex oxide may be a cerium-zirconium complex oxide, for example. When ceria is present as ceria in a cerium-zirconium complex oxide, it can exist in a metastable state even if the amount of oxygen defects in ceria increases, thereby increasing the atmosphere relaxation function of ceria.

The OSC material content of the second inorganic oxide particles may be 5 mass% or greater, 7.5 mass% or greater, 15 mass% or greater or 20 mass% or greater, and 50 mass% or lower, 45 mass% or lower, 40 mass% or lower, 35 mass% or lower, 30 mass% or lower or 25 mass% or lower, with 100 mass% as the total mass of the second inorganic oxide particles.

The amount of the OSC material (typically ceria) in the second catalyst coating layer may be 3.0 g/L or greater, 4.0 g/L or greater, 5.0 g/L or greater, 6.0 g/L or greater or 8.0 g/L or greater, and 20.0 g/L or lower, 15.0 g/L or lower, 12.0 g/L or lower, 11.0 g/L or lower or 10.0 g/L or lower, as the mass of the OSC material per 1 L volume of the substrate.

<Other components>

The second inorganic oxide particles in the second catalyst coating layer may also comprise other components in addition to the second inorganic oxide particles. Such other components include inorganic oxide particles other than the second inorganic oxide particles, and binders, for example.

The inorganic oxide particles other than the second inorganic oxide particles may be, for example, a complex oxide composed of one type or two or more types of inorganic oxide selected from among alumina, silica, titania and zirconia, or a complex oxide comprising these inorganic oxides or complex oxides with one or more selected from among oxides of rare earth elements other than ceria.

The second inorganic oxide particles preferably comprise alumina from the viewpoint of heat resistance of the exhaust gas purification catalyst device. The alumina content of the second inorganic oxide particles may be 20 mass% or greater, 30 mass% or greater, 40 mass% or greater, 50 mass% or greater or 60 mass% or greater, and 90 mass% or lower, 80 mass% or lower, 70 mass% or lower or 60 mass% or lower, with 100 mass% as the total mass of the second inorganic oxide particles.

The amount of alumina in the second catalyst coating layer may be 10.0 g/L or greater, 20.0 g/L or greater, 30.0 g/L or greater, 50.0 g/L or greater, 60.0 g/L or greater or 70.0 g/L or greater, and 200.0 g/L or lower, 150.0 g/L or lower, 120.0 g/L or lower, 100.0 g/L or lower or 80.0 g/L or lower, as the mass of alumina per 1 L volume of the substrate.

<Second noble metal catalyst particles>

The second catalyst coating layer comprises second noble metal catalyst particles together with the second inorganic oxide particles. The second noble metal catalyst particles comprise Rh.

The amount of the second noble metal catalyst particles in the second catalyst coating layer may be 0.03 g/L or greater, 0.05 g/L or greater, 0.06 g/L or greater, 0.08 g/L or greater, 0.10 g/L or greater or 0.12 g/L or greater, and 2.0 g/L or lower, 1.5 g/L or lower, 1.00 g/L or lower, 0.50 g/L or lower, 0.30 g/L or lower, 0.20 g/L or lower, 0.18 g/L or lower or 0.15 g/L or lower, as the mass of the first noble metal catalyst particles per 1 L volume of the substrate (the total mass, for multiple types of noble metals).

The total amount of Pt and Pd in the second catalyst coating layer is 0.05 g/L or lower, in terms of metal per 1 L volume of the substrate. A total amount of Pt and Pd of 0.05 g/L or lower in the second catalyst coating layer means that the second catalyst coating layer comprises essentially no Pt or Pd. If the second catalyst coating layer comprises essentially no Pt and Pd in total, the NOx reduction purification performance will be improved.

The total amount of Pt and Pd in terms of metal per 1 L volume of the substrate in the second catalyst coating layer may be 0.03 g/L or lower, 0.01 g/L or lower, 0.005 g/L or lower, 0.003 g/L or lower or 0.001 g/L or lower, or the second catalyst coating layer may comprise absolutely no Pt or Pd.

The second noble metal catalyst particles in the second catalyst coating layer are supported on the second inorganic oxide particles.

The second noble metal catalyst particles in the second catalyst coating layer are supported on the second inorganic oxide particles.

When the second catalyst coating layer comprises inorganic oxide particles other than the second inorganic oxide particles, together with the second inorganic oxide particles, the second noble metal catalyst particles may be supported on either one of the second inorganic oxide particles or the inorganic oxide particles other than the second inorganic oxide particles, or it may be supported on both.

<Amount of alkaline earth metal oxide in second catalyst coating layer>

The amount of alkaline earth metal oxide in the second catalyst coating layer is 0.5 g/L or lower, per 1 L volume of the substrate. An alkaline earth metal oxide content of 0.5 g/L or lower in the second catalyst coating layer means that the second catalyst coating layer comprises essentially no alkaline earth metal oxide. If the second catalyst coating layer comprises essentially no alkaline earth metal oxide, it will be possible to inhibit reduction in NOx reduction purification activity of Rh due to interaction between Rh and the alkaline earth metal oxide.

The amount of alkaline earth metal oxide in the second catalyst coating layer per 1 L volume of the substrate may be 0.3 g/L or lower, 0.01 g/L or lower, 0.05 g/L or lower, 0.03 g/L or lower or 0.01 g/L or lower, or the second catalyst coating layer may comprise absolutely no alkaline earth metal oxide.

<Coating length of second catalyst coating layer>

The coating length of the second catalyst coating layer may be 70% or greater, 75% or greater, 80% or greater, 85% or greater, 90% or greater or 95% or greater of the entire length of the substrate, or the second catalyst coating layer may be disposed over the entire length of the substrate, from the viewpoint of ensuring sufficient NOx reduction purification performance.

When the coating length of the second catalyst coating layer is shorter than the entire length of the substrate, preferably the second catalyst coating layer is situated on the substrate as far as possible toward the downstream end of the exhaust gas flow, and preferably the downstream end of the second catalyst coating layer is situated to match the downstream end of the substrate, from the viewpoint of ensuring contact with NOx released from the first catalyst coating layer.

<Specific examples of exhaust gas purification catalyst device construction>

Fig. 1 is an example of the construction of an exhaust gas purification catalyst device of the invention.

The exhaust gas purification catalyst device of Fig. 1 has a substrate (100), a first catalyst coating layer (200) on the substrate (100), and a second catalyst coating layer (300) on the first catalyst coating layer (200).

The first catalyst coating layer (200) comprises first inorganic oxide particles (10) and first noble metal catalyst particles (40), and further comprises other inorganic oxide particles (50) in addition to the first inorganic oxide particles (10).

The first inorganic oxide particles (10) comprise an OSC material (11) and a first alkaline earth metal oxide (20). The first inorganic oxide particles (10) comprise a complex oxide carrier (30), and a second alkaline earth metal oxide (22) supported on the complex oxide carrier (30). The complex oxide carrier (30) comprises the OSC material (11) and a first alkaline earth metal oxide (21), and optionally also comprises another component (12).

The first noble metal catalyst particles (40) in the first catalyst coating layer (200) include either or both Pt and Pd. The first noble metal catalyst particles (40) are supported on the first inorganic oxide particles (10), and may also be supported on the other inorganic oxide particles (50).

In other words, according to one aspect, the first catalyst coating layer (200) comprises:

a complex oxide carrier (30) comprising an OSC material (11) and a first alkaline earth metal oxide (21), and other inorganic oxide particles (50),
wherein first noble metal catalyst particles (40) and a second alkaline earth metal oxide (22) are supported on the complex oxide carrier (30), and
the first noble metal catalyst particles (40) are supported on the other inorganic oxide particles (50).

The first catalyst coating layer (200) comprises essentially no Rh.

The second catalyst coating layer (300) comprises second inorganic oxide particles (60) and second noble metal catalyst particles (70), and further comprises other inorganic oxide particles (80) in addition to the second inorganic oxide particles (60).

The second inorganic oxide particles (60) comprise the OSC material (11). The second inorganic oxide particles (60) comprise the OSC material (11) and optionally also comprise another component (13).

The second noble metal catalyst particles (70) in the second catalyst coating layer (300) include Rh. The second noble metal catalyst particles (70) are supported on the second inorganic oxide particles (60), and may also be supported on the other inorganic oxide particles (80).

In other words, according to one aspect, the second catalyst coating layer (300) comprises:

second inorganic oxide particles (60) comprising an OSC material (11), and
other inorganic oxide particles (80),

wherein second noble metal catalyst particles (70) are supported on the second inorganic oxide particles (60) and the other inorganic oxide particles (80).

The second catalyst coating layer (300) also comprises essentially no Pt or Pd, or alkaline earth metal oxide.

<Method for producing exhaust gas purification catalyst device>

The exhaust gas purification catalyst device of the invention may be produced by any method so long as it has the construction described above.

For example, the exhaust gas purification catalyst device of the invention may be produced by a method that comprises:

forming a first catalyst coating layer comprising first inorganic oxide particles and first noble metal catalyst particles on a substrate (first catalyst coating layer forming step), and
forming a second catalyst coating layer on the substrate on which the first catalyst coating layer has been formed (second catalyst coating layer forming step).

A typical example of the exhaust gas purification catalyst device of the invention will now be explained, using production of the exhaust gas purification catalyst device illustrated in Fig. 1 for illustration.

<First catalyst coating layer forming step>

The first catalyst coating layer forming step may be carried out, for example, by coating a first catalyst coating layer-forming coating solution on a substrate and firing it. The coating layer may be dried if necessary after coating and before firing.

The substrate used may be appropriately selected depending on the desired construction for the exhaust gas purification catalyst device. The substrate may be a cordierite straight flow type or wall flow type monolith honeycomb substrate, for example.

According to one aspect, the first catalyst coating layer (200) in the exhaust gas purification catalyst device of Fig. 1 comprises:

a complex oxide carrier (30) comprising an OSC material (11) and a first alkaline earth metal oxide (21), and
other inorganic oxide particles (50),
wherein first noble metal catalyst particles (40) and a second alkaline earth metal oxide (22) are supported on the complex oxide carrier (30), and
the first noble metal catalyst particles (40) are supported on the other inorganic oxide particles (50).

The first catalyst coating layer-forming coating solution for formation of the first catalyst coating layer (200) is a liquid composition comprising the complex oxide carrier (30), the other inorganic oxide particles (50), the precursor for the first noble metal catalyst particles (40), and the precursor for the second alkaline earth metal oxide (22), and other components as necessary, either dissolved or suspended in an appropriate solvent.

The complex oxide carrier (30) may also be produced by a coprecipitation process, for example. Specifically, it can be produced by adding an appropriate precipitant to a liquid mixture (preferably an aqueous solution) comprising the precursor for the OSC material (11), the precursor for the first alkaline earth metal oxide (21) and precursors for optional components as necessary, and then drying and firing, and subsequently pulverizing and sorting, the resulting precipitate.

The precursor for the OSC material (11), the precursor for the first alkaline earth metal oxide (21) and the precursors for optional components may be nitrates, sulfates, hydrochlorides or acetates of the respective metals. The precipitant may be an alkali, such as sodium hydroxide, potassium hydroxide or ammonium hydroxide, and may be used as a solution, and preferably an aqueous solution.

Drying and firing of the precipitate, and subsequent pulverizing and sorting of the fired product, may be carried out by publicly known methods, or by such methods with appropriate modifications made by a person skilled in the art.

The precursor for the first noble metal catalyst particles (40) and the precursor for the second alkaline earth metal oxide (22) may be nitrates, sulfates, hydrochlorides or acetates of the metals. One other component may be a binder, for example. The solvent may be water or a mixed solvent comprising water and a water-soluble organic solvent, but it will typically be water.

Coating of the first catalyst coating layer-forming coating solution onto the substrate, and drying and firing after coating, may each be carried out based on publicly known methods.

<Second catalyst coating layer forming step>

In the second catalyst coating layer forming step, the second catalyst coating layer is formed on the substrate on which the first catalyst coating layer has been formed as described above.

According to one aspect, the second catalyst coating layer (300) of the exhaust gas purification catalyst device illustrated in Fig. 1 comprises:

second inorganic oxide particles (60) comprising an OSC material (11), and
other inorganic oxide particles (80),

wherein second noble metal catalyst particles (70) are supported on the second inorganic oxide particles (60) and the other inorganic oxide particles (80).

The second catalyst coating layer-forming coating solution for formation of the second catalyst coating layer (300) is a liquid composition comprising the second inorganic oxide particles (60), the other inorganic oxide particles (80), and the precursor for the second noble metal catalyst particles (70), and other components as necessary, either dissolved or suspended in an appropriate solvent.

The precursor for the second noble metal catalyst particles (70) may be a nitrate, sulfate, hydrochloride or acetate of the metal. One other component may be a binder, for example. The solvent may be water or a mixed solvent comprising water and a water-soluble organic solvent, but it will typically be water.

Coating of the second catalyst coating layer-forming coating solution, and drying and firing after coating, may each be carried out based on publicly known methods.

<Exhaust gas purification method>

The exhaust gas purification catalyst device of the invention is suitable as a catalyst device for purification of exhaust gas emitted from an engine of an automobile, for example. Using an exhaust gas purification catalyst device of the invention can effectively reduce NOx emissions for exhaust gas comprising NOx, even in a cold state such as immediately after engine start-up.

According to another aspect, the invention provides an exhaust gas purification method that comprises contacting exhaust gas with the exhaust gas purification catalyst device of the invention.

Contact of the exhaust gas with the exhaust gas purification catalyst device of the invention may be accomplished, for example, by installing the exhaust gas purification catalyst device of the invention in an engine exhaust system according to a publicly known method.

EXAMPLES

<Synthesis of complex oxide carrier 1>

Zirconium oxynitrate, cerium nitrate, aluminum nitrate, neodymium nitrate, lanthanum nitrate and magnesium acetate (precursor for the first alkali metal oxide (MgO)) were dissolved in purified water to the mass ratio values listed below in terms of oxide, to obtain acidic mixtures. A sodium hydroxide aqueous solution was added to the mixture to a pH of 7, and coprecipitation was carried out to obtain a precipitate. The precipitate was filtered out and thoroughly washed with purified water, after which it was dried for 8 hours in air at 250°C, and then fired for 2 hours in air at 500°C, to obtain a fired product. The obtained fired product was pulverized with an agate mortar and sorted to obtain a powder of complex oxide carrier 1 having particle diameters in the range of 2 to 10 $\mu$m.

The mass ratios of the components in complex oxide carrier 1 were as follows, in terms of oxides.

$ZrO_2$: 69.0 mass%
$CeO_2$: 21.0 mass%
$Nd_2O_3$: 5.3 mass%
$La_2O_3$: 1.7 mass%
MgO: 3.0 mass%

<Other oxide support>

The following were used other oxide supports.

A complex oxide carrier with mass ratios of the components in complex oxide carrier 2 as follows, in terms of oxides.

$ZrO_2$: 66.0 mass%
$CeO_2$: 21.0 mass%
$Nd_2O_3$: 5.3 mass%
$La_2O_3$: 1.7 mass%
MgO: 6.0 mass%

A complex oxide carrier with mass ratios of the components in complex oxide carrier 3 as follows, in terms of oxides.

$ZrO_2$: 72.0 mass%
$CeO_2$: 21.0 mass%
$Nd_2O_3$: 5.3 mass%
$La_2O_3$: 1.7 mass%
MgO: 0 mass%

A complex oxide carrier (spinel) with mass ratios of the components in complex oxide carrier 4 as follows, in terms of oxides.

$Al_2O_3$: 65.0 mass%
$CeO_2$: 17.0 mass%
$La_2O_3$: 2.0 mass%
MgO: 16.0 mass%

Other inorganic oxide particles 1: Cerium-zirconium complex oxide particles comprising 40 mass% $CeO_2$, with trace addition of $Pr_2O_3$ and $La_2O_3$, fired for 5 hours at 800°C.

Other inorganic oxide particles 2: $La_2O_3$ composite alumina, $La_2O_3$ content: 4.0 mass%

Other inorganic oxide particles 3: Cerium-zirconium complex oxide particles comprising 20 mass% $CeO_2$, with trace addition of $Nd_2O_3$, $La_2O_3$ and $Y_2O_3$, fired for 5 hours at 800°C.

<Substrate>

The substrate used was a cordierite honeycomb substrate with a square columnar shape, 600 cells, a full length of 115 mm, a wall thickness of 2 mil (0.0508 mm) and a volume of 1,259 mL.

<Example 1>

(1) Preparation of coating solution for formation of Pt-Pd layer

Palladium nitrate, platinum nitrate and barium sulfate (second alkaline earth metal oxide precursors), the powder of complex oxide carrier 1 obtained under "Synthesis of complex oxide carrier 1" above, the other inorganic oxide particles 1, the other inorganic oxide particles 2, and an alumina-based binder, were loaded into purified water and thoroughly stirred to obtain a Pt-Pd layer-forming coating solution as a suspension.

The contents of each of the components in the obtained Pt-Pd layer-forming coating solution were as follows, as mass per 1 L volume of the substrate.

Barium sulfate: 5.0 g/L as barium oxide
Palladium nitrate: 3.0 g/L as palladium metal
Platinum nitrate: 1.39 g/L as platinum metal
Complex oxide carrier 1: 40 g/L
Other inorganic oxide particles 1: 40 g/L
Other inorganic oxide particles 2: 40 g/L

(2) Preparation of coating solution for formation of Rh layer

Rhodium nitrate, the other inorganic oxide particles 2 and the other inorganic oxide particles 3 were loaded into purified water and thoroughly stirred to obtain a Rh layer-forming coating solution as a suspension.
The contents of each of the components in the obtained Rh layer-forming coating solution were as follows, as mass per 1 L volume of the substrate.

Rhodium nitrate: 0.13 g/L as rhodium metal
Other inorganic oxide particles 2: 70 g/L
Other inorganic oxide particles 3: 50 g/L

(3) Production of exhaust gas purification catalyst device

After casting the Pt-Pd layer-forming coating solution onto a substrate, the excess portion was blown off using a blower, coating the Pt-Pd layer-forming coating solution onto the entire length of the substrate. The coated substrate was allowed to stand to dry for 2 hours in a dryer heated to 120°C, and then fired for 2 hours in an electric furnace at 500°C to form a Pt-Pd layer on the substrate.
After casting a Rh layer-forming coating solution onto the Pt-Pd layer-formed substrate, the excess portion was blown off using a blower, coating the Rh layer-forming coating solution onto the entire length of the substrate. The coated substrate was allowed to stand to dry for 2 hours in a dryer heated to 120°C, and then fired for 2 hours in an electric furnace at 500°C to form a Rh layer, thereby obtaining an exhaust gas purification catalyst device having a Pt-Pd layer and a Rh layer on that order on the substrate.

(4) Evaluation

The obtained exhaust gas purification catalyst device was mounted in the exhaust system of a 4,608 cc cylinder capacity V-shaped 8-cylinder engine, and exhaust gases with a stoichiometric atmosphere and a lean atmosphere were repeatedly flowed for respective time periods during 50 hours at a catalyst bed temperature of 1,000°C, to determine the durability of the catalyst device.
The durability-tested exhaust gas purification catalyst device was used to measure the NOx emission in the cold state while in WLTC driving mode, and the reduction rate was calculated by the following formula, with 100% as the amount of NOx in the exhaust gas in the cold state. The results are shown in Table 1.

$$\text{NOx reduction rate (\%)} = (\text{NOx in exhaust gas - NOx emission}) / \text{NOx in exhaust gas} \times 100$$

<Examples 2 to 7 and Comparative Examples 1 and 2>

Exhaust gas purification catalyst devices were produced and evaluated in the same manner as Example 1, except that the compositions of the Pt-Pd layer-forming coating solution and the Rh layer-forming coating solution were changed as shown in Table 1 and Table 2. The results are shown in Table 1 and Table 2.

<Comparative Example 3>

An exhaust gas purification catalyst device with a Rh layer and a Pt-Pd layer in that order on a substrate was obtained in the same manner as Comparative Example 2, except that the order of formation of the Pt-Pd layer and Rh layer was reversed. The obtained exhaust gas purification catalyst device was used for evaluation in the same manner as Example 1. The results are shown in Table 2.

<Comparative Example 4>

An exhaust gas purification catalyst device was produced and evaluated in the same manner as Comparative Example 3, except that the compositions of the Pt-Pd layer-forming coating solution and the Rh layer-forming coating solution were changed as shown in Table 2. The results are shown in Table 2.

[Table 1]

| | | | Example 1 | Example 2 | Example 3 | Example 4 | Example 5 | Example 6 | Example 7 |
|---|---|---|---|---|---|---|---|---|---|
| Pt-Pd layer | Disposed position | | Lower layer | Lower layer | Lower layer | Lower layer | Lower layer | Lower layer | Lower layer |
| | Ba sulfate (g-BaO/L) | | 5.0 | 5.0 | 5.0 | 5.0 | 5.0 | 5.0 | 5.0 |
| | Pd nitrate (g-Pd/L) | | 3.0 | 3.0 | 3.0 | 3.0 | 3.0 | 3.0 | 3.0 |
| | Pt nitrate (g-Pt/L) | | 1.39 | 1.39 | 1.39 | 1.39 | 1.39 | 1.39 | 1.39 |
| | Complex oxide carrier 1 | (g/L) | 40 | 20 | - | 10 | 70 | - | - |
| | | (g-MgO/L) | 1.20 | 0.60 | - | 0.30 | 2.10 | - | - |
| | Complex oxide carrier 2 | (g/L) | - | - | 40 | - | - | - | - |
| | | (g-MgO/L) | - | - | 0.40 | - | - | - | - |
| | Complex oxide carrier 3 | (g/L) | - | - | - | - | - | - | 40 |
| | | (g-MgO/L) | - | - | - | - | - | - | 0 |
| | Complex oxide carrier 4 | (g/L) | - | - | - | - | - | 40 | - |
| | | (g-MgO/L) | - | - | - | - | - | 6.40 | - |
| | Other inorganic oxide particles 1 (g/L) | | 40 | 20 | 40 | 10 | 70 | 40 | 40 |
| | Other inorganic oxide particles 2 (g/L) | | 40 | 20 | 40 | 10 | 70 | 40 | 40 |
| Rh layer | Disposed position | | Upper layer | Upper layer | Upper layer | Upper layer | Upper layer | Upper layer | Upper layer |
| | Rn nitrate (g-Rh/L) | | 0.13 | 0.13 | 0.13 | 0.13 | 0.13 | 0.13 | 0.13 |
| | Complex oxide carrier 1 | (g/L) | - | - | - | - | - | - | - |
| | | (g-MgO/L) | - | - | - | - | - | - | - |
| | Other inorganic oxide particles 2 (g/L) | | 70 | 70 | 70 | 70 | 70 | 70 | 70 |
| | Other inorganic oxide particles 3 (g/L) | | 50 | 50 | 50 | 50 | 50 | 50 | 50 |
| NOx reduction (%) | | | 39.1 | 38.5 | 39.0 | 36.0 | 41.0 | 34.1 | 32.6 |

[Table 2]

| | | Comp. Example 1 | Comp. Example 2 | Comp. Example 3 | Comp. Example 4 |
|---|---|---|---|---|---|
| | Disposed position | Lower layer | Lower layer | Upper layer | Upper layer |
| | Ba sulfate (g-BaO/L) | 0.0 | 5.0 | 5.0 | 5.0 |

(continued)

| | | | Comp. Example 1 | Comp. Example 2 | Comp. Example 3 | Comp. Example 4 |
|---|---|---|---|---|---|---|
| Pt-Pd layer | Pd nitrate (g-Pd/L) | | 3.0 | 3.0 | 3.0 | 3.0 |
| | Pt nitrate (g-Pt/L) | | 1.39 | 1.39 | 1.39 | 1.39 |
| | Complex oxide carrier 1 | (g/L) | - | 40 | 40 | 40 |
| | | (g-MgO/L) | - | 1.20 | 1.20 | 1.20 |
| | Complex oxide carrier 2 | (g/L) | - | - | - | 40 |
| | | (g-MgO/L) | - | - | - | 0.40 |
| | Complex oxide carrier 3 | (g/L) | - | - | - | - |
| | | (g-MgO/L) | - | - | - | - |
| | Complex oxide carrier 4 | (g/L) | - | - | - | - |
| | | (g-MgO/L) | - | - | - | - |
| | Other inorganic oxide particles 1 (g/L) | | 40 | 40 | 40 | 40 |
| | Other inorganic oxide particles 2 (g/L) | | 120 | 40 | 40 | 40 |
| Rh layer | Disposed position | | Upper layer | Upper layer | Lower layer | Lower layer |
| | Rh nitrate (g-Rh/L) | | 0.13 | 0.13 | 0.13 | 0.13 |
| | Complex oxide carrier 1 | (g/L) | 0 | 25 | 25 | - |
| | | (g-MgO/L) | 0 | 0.75 | 0.75 | - |
| | Other inorganic oxide particles 2 (g/L) | | 70 | 70 | 70 | 70 |
| | Other inorganic oxide particles 3 (g/L) | | 50 | 25 | 25 | 50 |
| NOx reduction (%) | | | 29.8 | 32.1 | 31.1 | 30.2 |

As shown in Table 1:

for an exhaust gas purification catalyst device having on a substrate:

a complex oxide carrier comprising an OSC material, and a first catalyst coating layer comprising first noble metal catalyst particles of either or both Pt and Pd, and

a second catalyst coating layer comprising second inorganic oxide particles and second noble metal catalyst particles comprising Rh,

with the first catalyst coating layer as the lower layer and the second catalyst coating layer as the upper layer,

the exhaust gas purification catalyst device of Comparative Example 1 wherein both the first catalyst coating layer and second catalyst coating layer lacked an alkaline earth metal oxide, and

the exhaust gas purification catalyst device of Comparative Example 2 wherein both the first catalyst coating layer and the second catalyst coating layer comprised an alkaline earth metal oxide,

both had insufficient reduction in NOx in exhaust gas in the cold state.

In contrast, the NOx reduction percentage in exhaust gas in the cold state was confirmed to be large with Examples 1 to 7 wherein:

the first catalyst coating layer was the lower layer and the second catalyst coating layer was the upper layer,
the first catalyst coating layer comprised an alkaline earth metal oxide, and
the second catalyst coating layer lacked a significant amount of alkaline earth metal oxide.

However, the NOx reduction percentage in exhaust gas in the cold state was confirmed to be insufficient with Comparative Examples 3 and 4 wherein:

the second catalyst coating layer was the lower layer and the first catalyst coating layer was the upper layer, even when the first catalyst coating layer comprised an alkaline earth metal oxide, and the second catalyst coating layer did not comprise an alkaline earth metal oxide.

These results verified that the exhaust gas purification catalyst device of the invention exhibits particularly excellent NOx purification performance in the cold state.

REFERENCE SIGNS LIST

10 First inorganic oxide particles
11 OSC material
12, 13 Other components
20 Alkaline earth metal oxide
21 First alkaline earth metal oxide
22 Second alkaline earth metal oxide
30 Complex oxide carrier
40 First noble metal catalyst particles
50, 80 Other inorganic oxide particles
60 Second inorganic oxide particles
70 Second noble metal catalyst particles
100 Substrate
200 First catalyst coating layer
300 Second catalyst coating layer

**Claims**

1. An exhaust gas purification catalyst device comprising a substrate, a first catalyst coating layer on the substrate and a second catalyst coating layer on the first catalyst coating layer, wherein:

   the first catalyst coating layer comprises first inorganic oxide particles and first noble metal catalyst particles,
   the second catalyst coating layer comprises second inorganic oxide particles and second noble metal catalyst particles,
   the first inorganic oxide particles comprise an OSC material and an alkaline earth metal oxide,
   the first noble metal catalyst particles comprise either or both Pt and Pd,
   the second inorganic oxide particles comprise an OSC material,
   the second noble metal catalyst particles comprise Rh,
   the amount of Rh in the first catalyst coating layer in terms of metal per 1 L volume of the substrate is 0.05 g/L or lower, and
   the total amount of Pt and Pd in the second catalyst coating layer in terms of metal per 1 L volume of the substrate is 0.05 g/L or lower, and the amount of alkaline earth metal oxide per 1 L volume of the substrate is 0.5 g/L or lower.

2. The exhaust gas purification catalyst device according to claim 1, wherein the first inorganic oxide particles comprise:

   a complex oxide carrier comprising an OSC material and a first alkaline earth metal oxide, and
   a second alkaline earth metal oxide supported on the complex oxide carrier.

3. The exhaust gas purification catalyst device according to claim 2, wherein at least a portion of the first noble metal catalyst particles are supported on the complex oxide carrier together with the second alkaline earth metal oxide.

4. The exhaust gas purification catalyst device according to claim 2 or 3, wherein the first alkaline earth metal oxide is magnesium oxide.

5. The exhaust gas purification catalyst device according to any one of claims 2 to 4, wherein the second alkaline earth metal oxide is one or more selected from the group consisting of magnesium oxide, barium oxide and strontium oxide.

6. The exhaust gas purification catalyst device according to any one of claims 2 to 5, wherein the amount of the first alkaline earth metal oxide is 0.1 mass% or higher and 20 mass% or lower, based on 100 mass% as the total mass of the complex oxide carrier.

7. The exhaust gas purification catalyst device according to any one of claims 2 to 6, wherein the loading amount of the second alkaline earth metal oxide is 0.5 mass% or higher and 25 mass% or lower, based on 100 mass% as the total mass of the complex oxide carrier.

8. The exhaust gas purification catalyst device according to any one of claims 2 to 7, wherein the amount of the first noble metal catalyst particles is 0.5 g/L or greater and 10.0 g/L or lower per 1 L volume of the substrate.

9. The exhaust gas purification catalyst device according to any one of claims 2 to 8, wherein the first inorganic oxide particles further comprise alumina.

10. The exhaust gas purification catalyst device according to any one of claims 1 to 9, wherein the amount of the second noble metal catalyst particles is 0.05 g/L or greater and 2.0 g/L or lower per 1 L volume of the substrate.

11. The exhaust gas purification catalyst device according to any one of claims 1 to 10, wherein the second inorganic oxide particles further comprise alumina.

12. The exhaust gas purification catalyst device according to any one of claims 1 to 11, wherein the OSC material comprises ceria in a cerium-zirconium complex oxide.

13. The exhaust gas purification catalyst device according to any one of claims 1 to 12, wherein the first noble metal catalyst particles comprise both Pt and Pd.

14. The exhaust gas purification catalyst device according to any one of claims 1 to 13, wherein the coating length of the first catalyst coating layer is 35% or greater of the entire length of the substrate.

15. The exhaust gas purification catalyst device according to any one of claims 1 to 14, wherein the coating length of the second catalyst coating layer is 70% or greater of the entire length of the substrate.

16. An exhaust gas purification method which comprises contacting exhaust gas with an exhaust gas purification catalyst device according to any one of claims 1 to 15.

# Fig. 1

## INTERNATIONAL SEARCH REPORT

International application No.

**PCT/JP2023/000083**

### A. CLASSIFICATION OF SUBJECT MATTER

*B01D 53/94*(2006.01)i; *B01J 23/63*(2006.01)i; *B01J 35/04*(2006.01)i; *F01N 3/08*(2006.01)i; *F01N 3/10*(2006.01)i; *F01N 3/24*(2006.01)i; *F01N 3/28*(2006.01)i
FI:    B01D53/94 222; B01J35/04 301L; B01D53/94 245; B01D53/94 280; F01N3/28 301Q; F01N3/10 A; F01N3/24 E; F01N3/08 A; B01J23/63 A ZAB

According to International Patent Classification (IPC) or to both national classification and IPC

### B. FIELDS SEARCHED

Minimum documentation searched (classification system followed by classification symbols)

B01D53/94; B01J23/63; B01J35/04; F01N3/08; F01N3/10; F01N3/24; F01N3/28

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2019-531883 A (JOHNSON MATTHEY PUBLIC LIMITED COMPANY) 07 November 2019 (2019-11-07)<br>claims 10, 12, 20, paragraphs [0003], [0019]-[0022], [0027], [0060]-[0063], [0118]-[0119] | 1-16 |
| A | JP 2016-517343 A (BASF CORPORATION) 16 June 2016 (2016-06-16)<br>entire text, all drawings | 1-16 |
| P, A | WO 2022/249847 A1 (CATALER CORP) 01 December 2022 (2022-12-01)<br>entire text, all drawings | 1-16 |

☐ Further documents are listed in the continuation of Box C.      ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **20 February 2023** | **07 March 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

| International application No. |
| --- |
| **PCT/JP2023/000083** |

| Patent document cited in search report | | | Publication date (day/month/year) | Patent family member(s) | Publication date (day/month/year) |
| --- | --- | --- | --- | --- | --- |
| JP | 2019-531883 | A | 07 November 2019 | US 2018/0065113 A1 claims 1-20, paragraphs [0003]-[0005], [0023]-[0027], [0031], [0065]-[0072], [0123]-[0124] GB 2553339 A WO 2018/042181 A1 EP 3910171 B1 DE 102017120207 A1 KR 10-2019-0043165 A CN 109690041 A | |
| JP | 2016-517343 | A | 16 June 2016 | US 2014/0360171 A1 entire text, all drawings WO 2014/164876 A1 EP 2991761 A1 CA 2903117 A1 KR 10-2015-0131126 A CN 105188920 A | |
| WO | 2022/249847 | A1 | 01 December 2022 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010119994 A
- JP 2001198461 A